# EUROPEAN PATENT SPECIFICATION

(11) **EP 4 375 199 B1**
(45) Date of publication and mention of the grant of the patent: **28.01.2026**
(21) Application number: 22946029.0
(22) Date of filing: 02.11.2022
(51) Int. Cl.: B64F 5/23, B66F 11/04, B66C 23/86, B66C 23/82, B66C 23/693, B66C 13/46, B66C 23/70, B66C 23/00

(54) **DEICING VEHICLE HAVING FUNCTION OF ONE-KEY RETURN AND METHOD FOR CONTROLLING RETURN OF BOOM**
ENTEISUNGSFAHRZEUG MIT FUNKTION ZUR RÜCKFÜHRUNG MIT EINEM SCHLÜSSEL UND VERFAHREN ZUR STEUERUNG DER RÜCKFÜHRUNG DES AUSLEGERS
VÉHICULE DE DÉGIVRAGE PRÉSENTANT UNE FONCTION DE RETOUR À UNE CLÉ ET PROCÉDÉ DE COMMANDE DE RETOUR DE FLÈCHE

(30) Priority: 30.09.2022 CN 202211213954
(43) Date of publication of application: 29.05.2024
(73) Proprietor: Weihai Guangtai Airport Equipment Co., Ltd., Weihai, Shandong 264200 (CN)
(72) Inventor: DU, Kuijiang, Weihai, Shandong 264200 (CN); LI, Wenxuan, Weihai, Shandong 264200 (CN); LIU, Haitao, Weihai, Shandong 264200 (CN); REN, Yongcheng, Weihai, Shandong 264200 (CN); TANG, Minglei, Weihai, Shandong 264200 (CN); QI, Hongtao, Weihai, Shandong 264200 (CN)
(74) Representative: JD&P Patent Attorneys Joanna Dargiewicz & Partners
(86) International application number: PCT/CN2022/129130
(87) International publication number: WO 2024/065943

(56) References cited:
- CN-A- 112 224 442
- CN-A- 112 224 442
- CN-A- 112 296 998
- CN-A- 114 715 012
- CN-B- 108 673 467
- CN-U- 207 725 629
- CN-U- 215 098 345
- CN-U- 215 098 345
- CN-U- 215 494 647
- US-A- 4 597 498

## Description

### TECHNICAL FIELD

The present invention relates to the technical field of airport ground service equipment, and particularly to a deicing vehicle with a one-key return function and a boom return control method.

### BACKGROUND OF THE PRESENT INVENTION

An airplane deicing vehicle is one of necessary vehicles for guaranteeing airplane operation safety of airports and airlines in cold regions. In the case of severe weather such as rain, snow and frost, a surface of airplane may be frozen and frosted, and in order to ensure flight safety, it is necessary to require the airplane to be deiced before taking off. A working principle of the airplane deicing vehicle is to spray a heated deicing liquid on the surface of airplane to remove ice, thus guaranteeing airplane operation safety.

With reference to the application with the authorization publication number CN215098345U and the title INTELLIGENT ELECTRIC AIRPLANE DEICING VEHICLE, an existing electric airplane deicing vehicle uses an electric vehicle chassis and an electric heating system to heat the deicing liquid. The existing electric airplane deicing vehicle comprises an electric vehicle chassis, a power battery pack, an electric control system, an aerial operating device, a deicing spray system, an anti-icing spray system, a deicing liquid tank and an anti-icing liquid tank.

The airplane deicing vehicle uses the heated deicing liquid to deice the airplane. During the deicing operation, an operator in an operating cabin needs to control an aerial operating arm to reach a to-be-deiced position of the airplane, and control a deicing spray gun to perform the deicing operation on the airplane. After the deicing operation is finished, the operator controls the aerial operating arm to retract to an initial position, so as to evacuate the deicing vehicle. When a boom is operated, the operator's line of sight is oriented to a front portion of a vehicle head, and the boom moves at a rear portion of the vehicle head, leading to a large blind area of sight, a slow operating action and a high misoperation probability. Moreover, a labor intensity of the operator is high, a boom retraction speed is slow, and boom retraction time is long, thus reducing work efficiency, and affecting flight efficiency and aircraft safety.

For example, CN112224442A discloses that a deicing vehicle with an auxiliary anti-collision system and an anti-collision method are provided, which solve the technical problem that the existing mode of detecting obstacles by adopting ultrasonic waves or a travel whisker switch cannot thoroughly avoid scratching between deicing equipment and an airplane. The deicing vehicle includes a deicing vehicle body which is provided with a vehicle head, a cantilever crane and a water cannon. The deicing vehicle further includes a controller, a display unit, a main arm inclination angle sensor, a folding arm inclination angle sensor, a first distance measuring sensor, a second distance measuring sensor and a third distance measuring sensor. The main arm inclination angle sensor is connected with a main arm of the arm support, the folding arm inclination angle sensor is connected with a folding arm of the arm support, and the first distance measuring sensor is connected with the front end of the water cannon. The second distance measuring sensor is connected with the vehicle head, and the third distance measuring sensor is connected with the folding arm of the arm support. The deicing vehicle can be applied to avoiding scratching between deicing equipment and an airplane.

CN108673467B discloses that a working robot system and method for live line maintaining of a transformer substation are provided. The system includes a robot body, a live line working tool, a remote control terminal, and a moving and carrying vehicle for conveying the robot body. The robot body includes a moving chassis, and an insulating lifting arm which is arranged on the moving chassis. A small fly jib is connected to the front end of the insulating lifting arm; a hotline working platform for positioning the hotline working tool is arranged at the front end of the small fly jib; the small fly jib is connected to the hotline working tool through a rapid connecting device; the electric working tool includes a foreign matter cleaning tool, a conductor repairing tool, an insulator sweeping tool and/ or a dry ice washing tool. The system has the beneficial effects that a multi-sensor information fusion technology is adopted; various types of sensors are mounted on the robot and used for sensing the robot body and the information of surrounding environment, so that the operation safety and reliability of the robot can be improved.

CN215494647U discloses that an intelligent spreading quantity control device is provided, the device includes a controller, a water pump rotating speed sensor, a vehicle speed sensor, a variable pump proportional valve, a flow meter, a waterway flow regulating valve, a waterway electromagnetic butterfly valve and a display. The water pump rotating speed sensor is used for transmitting detected water pump rotating speed information to the controller; the vehicle speed sensor is used for transmitting detected chassis vehicle speed information to the controller; the variable pump proportional valve is used for adjusting the rotating speed of the water pump; the flow meter is used for transmitting detected waterway flow information to the controller; the controller compares the theoretical flow with a flow feedback value monitored by the flow meter to adjust the opening degree of the flow adjusting valve, and the corresponding waterway electromagnetic butterfly valves are opened according to different flows; the display is electrically connected with the controller and used for inputting instructions and displaying numerical value information. High-end intelligent control with no change of spreading density with vehicle speed, high-precision spraying, strong expansion performance and convenient operation and maintenance is realized.

### SUMMARY OF THE PRESENT INVENTION

The present invention aims to solve the technical problems of slow operation action, high misoperation probability, high labor intensity of an operator, slow boom retraction speed and long boom retraction time in a process of controlling an aerial operating arm to retract to an initial position by the operator after a deicing operation of an existing airplane deicing vehicle is finished, and provides a deicing vehicle with a one-key return function and a boom return control method.

The present invention provides a deicing vehicle with a one-key return function, which comprises an electric vehicle chassis, a power battery pack, an aerial operating device, a deicing spray system and a deicing liquid tank, the power battery pack, the aerial operating device, the deicing liquid tank and the deicing spray system being all connected to a chassis crossbar of the electric vehicle chassis, the aerial operating device comprising an operating cabin, a folding arm, a first-section arm, a second-section arm, a rotary table, a hydraulic pump, a folding arm hydraulic cylinder, a first-section arm lifting hydraulic cylinder, a second-section arm telescopic hydraulic cylinder, a boom control valve set, a rotary table hydraulic motor, a rotary support, a driving gear and a driven gear, a control system being arranged in the operating cabin, the control system being provided with a boom controller, the chassis crossbar of the electric vehicle chassis being connected with an upright column, the rotary support comprising an outer ring and an inner ring, the outer ring being provided with teeth, the outer ring being fixedly connected to a top portion of the upright column, the rotary table being fixedly connected with the inner ring of the rotary support, the rotary table being provided with a disc portion, the rotary table hydraulic motor being fixedly connected with the disc portion of the rotary table, the driving gear being fixedly connected with an output shaft of the rotary table hydraulic motor, the driving gear being meshed with the teeth on the outer ring of the rotary support, the hydraulic pump being fixedly connected to the chassis crossbar of the electric vehicle chassis, an output port of the hydraulic pump being connected with the boom control valve set, the boom control valve set being fixedly connected to the chassis crossbar of the electric vehicle chassis, the boom control valve set being respectively connected with the folding arm hydraulic cylinder, the second-section arm telescopic hydraulic cylinder, the first-section arm lifting hydraulic cylinder and the rotary table hydraulic motor through hydraulic pipelines, and the boom control valve set being electrically connected with the boom controller; a cylinder body of the first-section arm lifting hydraulic cylinder being connected with the rotary table through a hinge shaft, and an output end of the first-section arm lifting hydraulic cylinder being connected with the first-section arm through a hinge shaft; a cylinder body of the second-section arm telescopic hydraulic cylinder being fixed in the first-section arm, and an output end of the second-section arm telescopic hydraulic cylinder being connected with the second-section arm; and a cylinder body of the folding arm hydraulic cylinder being connected with a front end of the second-section arm through a hinge shaft, and an output end of the folding arm hydraulic cylinder being hinged with the folding arm, wherein:
the deicing vehicle with the one-key return function further comprises a folding arm angle sensor, a first-section arm angle sensor, a stay wire sensor, a rotary table angle encoder and a boom one-key return switch, the folding arm angle sensor is connected with the folding arm, the first-section arm angle sensor is connected with the first-section arm, the stay wire sensor is arranged between the second-section arm and the first-section arm, the stay wire sensor comprises a body, a stay wire end and a stay wire fixing rod, the body of the stay wire sensor is fixedly connected to the first-section arm, the stay wire fixing rod is fixedly connected with the second-section arm, and the stay wire end of the stay wire sensor is fixedly connected to the stay wire fixing rod; the rotary table angle encoder is fixedly connected with the disc portion of the rotary table, the driven gear is fixedly connected with a rotor of the rotary table angle encoder, and the driven gear is meshed with the teeth on the outer ring of the rotary support; the folding arm angle sensor, the first-section arm angle sensor, the stay wire sensor and the rotary table angle encoder are respectively connected with the boom controller through signal wires; and the operating cabin is provided with an operating platform, the boom one-key return switch is arranged on the operating platform, and the control system is provided with the boom one-key return switch to be electrically connected with the boom controller.

Preferably, the deicing vehicle with the one-key return function further comprises a heating device, the heating device comprises a first three-junction, a first electromagnetic ball valve, a radiator, a hose, a second electromagnetic ball valve, a second three-junction and a controller, the first three-junction is connected with a deicing spray pipeline in the deicing spray system, the first electromagnetic ball valve is connected with the first three-junction, the first electromagnetic ball valve is connected with an inlet of the radiator through the hose, the second three-junction is connected with a deicing liquid conveying pipeline, an outlet of the second electromagnetic ball valve is connected with the second three-junction, an outlet of the radiator is connected with an inlet of the second electromagnetic ball valve through a pipeline, the radiator is arranged in a cab, the controller is arranged in the cab, the first electromagnetic ball valve is connected with the controller through a cable, and the second electromagnetic ball valve is connected with the controller through a cable.

The present invention further provides a boom return control method using the deicing vehicle with the one-key return function, which comprises the following steps of:
when the deicing vehicle is in an initial position, setting an angle value detected by the folding arm angle sensor, an angle value detected by the first-section arm angle sensor, a length value detected by the stay wire sensor and an angle value detected by the rotary table angle encoder to be 0 respectively by the boom controller; and
then performing a deicing operation on an airplane by the deicing vehicle, when the deicing operation of the deicing vehicle is finished, turning on the boom one-key return switch, sending a signal to the boom controller by the boom one-key return switch, detecting an angle value A of a position in which the folding arm is located in real time by the folding arm angle sensor, detecting a length value B of a position in which the second-section arm is located in real time by the stay wire sensor, detecting an angle value C of a position in which the first-section arm is located in real time by the first-section arm angle sensor, detecting an angle value D of a position in which the rotary table is located in real time by the rotary table angle encoder, sending data A, B, C and D to the boom controller, sending a control instruction to the boom control valve set by the boom controller so as to control the output end of the folding arm hydraulic cylinder to retract, control the output end of the second-section arm telescopic hydraulic cylinder to retract, control the output end of the first-section arm lifting hydraulic cylinder to retract, and control the rotary table hydraulic motor to rotate reversely, comparing the data A, B, C and D detected in real time with a preset value 0 by the boom controller, and until the angle value A is equal to 0, the length value B is equal to 0, the angle value C is equal to 0, and the angle value D is equal to 0, stopping sending the control instruction to the boom control valve set by the boom controller, thus stopping an action of the folding arm hydraulic cylinder, an action of the second-section arm telescopic hydraulic cylinder, an action of the first-section arm lifting hydraulic cylinder and an action of the rotary table hydraulic motor.

The present invention has the beneficial effects of reducing the labor intensity of the operator, increasing the boom retraction speed, shortening the boom retraction time, improving the work efficiency, and avoiding the misoperation of the operator.

Further features and aspects of the present invention will be clearly recorded in the following description of specific embodiments with reference to the drawings.

### DESCRIPTION OF THE DRAWINGS

FIG. 1 is a schematic structural diagram of an electric airplane deicing vehicle in the prior art;
FIG. 2 is a schematic structural diagram of a deicing vehicle according to the present invention;
FIG. 3 is a top view of the structure shown in FIG. 2;
FIG. 4 is a schematic diagram of a mounting structure of a stay wire sensor;
FIG. 5 is a schematic diagram of a state when a deicing operation is performed on an airplane by the deicing vehicle;
FIG. 6 is a schematic structural diagram of an aerial operating device in an unfolded state;

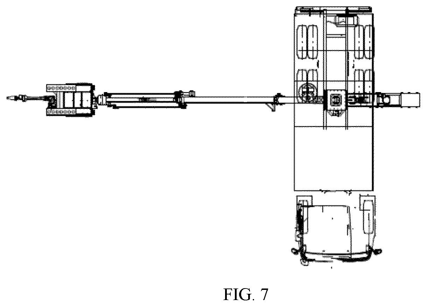

FIG. 7 is a top view of the structure shown in FIG. 6;
FIG. 8 is a schematic structural diagram of a rotary table mounted on an upright column through a rotary support;
FIG. 9 is a diagram of a mounting position of a rotary table angle encoder in FIG. 8;
FIG. 10 is a schematic structural diagram of a heating device mounted on the deicing vehicle, which is not part of the scope of the claims; and
FIG. 11 is a schematic structural diagram of a fuel heating device mounted on the deicing vehicle , which is not part of the scope of the claims.

### DETAILED DESCRIPTION OF PREFERRED EMBODIMENTS

The present invention is further described in detail hereinafter with reference to the drawings and specific embodiments.

### Embodiment 1

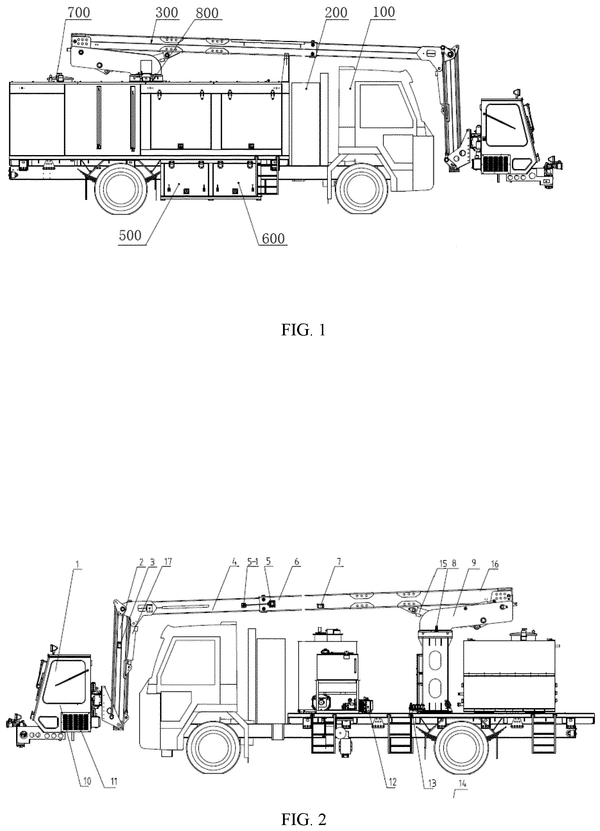

As shown in FIG. 1, an electric airplane deicing vehicle comprises an electric vehicle chassis 100, a power battery pack 200, an aerial operating device 300, a deicing spray system 500, an anti-icing spray system 600, a deicing liquid tank 700 and an anti-icing liquid tank 800, and the power battery pack 200, the aerial operating device 300, the deicing liquid tank 700, the anti-icing liquid tank 800, the deicing spray system 500 and the anti-icing spray system 600 are all connected to a chassis crossbar of the electric vehicle chassis 100. The deicing liquid tank 700 is connected with a spray pipeline in the aerial operating device 300 through the deicing spray system 500. The anti-icing liquid tank 800 is connected with the spray pipeline in the aerial operating device 300 through the anti-icing spray system 600. It should be noted that the anti-icing spray system 600 and the anti-icing liquid tank 800 are not necessary devices, and a deicing operation may be normally performed without the anti-icing spray system 600 and the anti-icing liquid tank 800.

A control system is mounted on an operating platform 10 in an operating cabin 1, and the control system is used for controlling the deicing vehicle to work. The control system is provided with a battery management module, the battery management module is electrically connected with the power battery pack 200, and the battery management module supplies power to the deicing liquid spray system 500, the anti-icing liquid spray system 600, the aerial operating device 300, the electric vehicle chassis 100 and other electric units. The control system is provided with a boom controller 11, and the boom controller 11 is used for controlling the aerial operating device 300 to move.

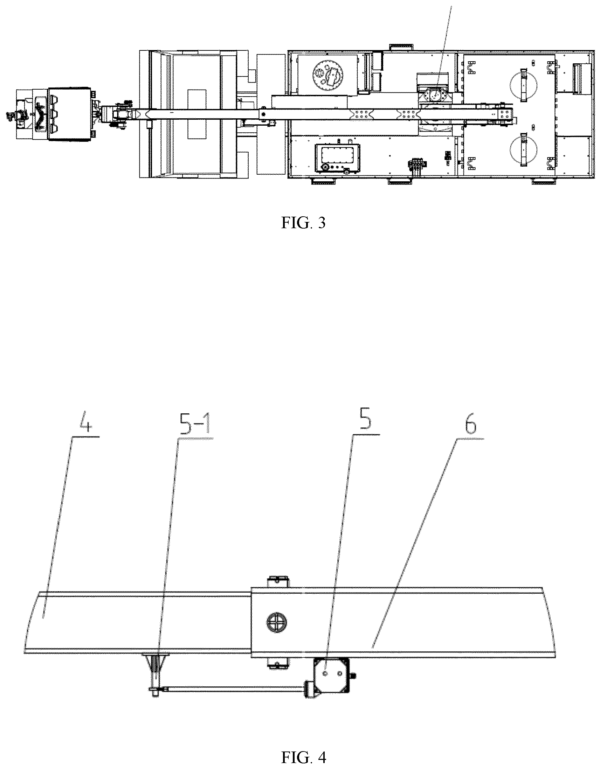

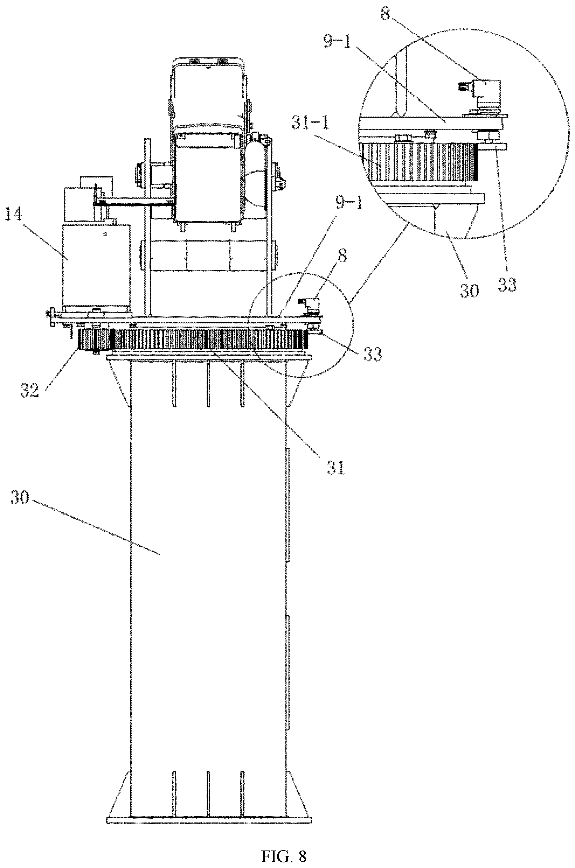

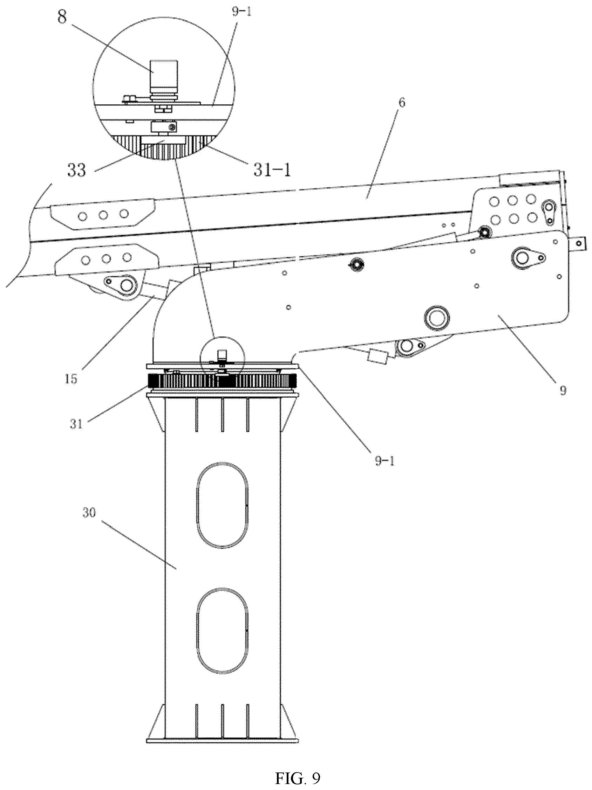

As shown in FIG. 2 and FIG. 3, the aerial operating device 300 comprises the operating cabin 1, a folding arm 2, a second-section arm 4, a first-section arm 6, a rotary table 9, a hydraulic pump 12, a folding arm hydraulic cylinder 17, a second-section arm telescopic hydraulic cylinder 16, a first-section arm lifting hydraulic cylinder 15, a boom control valve set 13 and a rotary table hydraulic motor 14, and an upright column 30 is fixedly mounted on the chassis crossbar of the electric vehicle chassis 100. As shown in FIG. 8 and FIG. 9, a rotary support 31 comprises an outer ring 31-1 and an inner ring, the outer ring 31-1 is provided with teeth, the outer ring 31-1 is fixedly mounted on a top portion of the upright column 30, the rotary table 9 is fixedly mounted on the inner ring of the rotary support 31, the rotary table 9 is provided with a disc portion 9-1 in a position close to the rotary support 31, and the rotary table hydraulic motor 14 is fixedly mounted on the disc portion 9-1. A driving gear 32 is fixedly connected with an output shaft of the rotary table hydraulic motor 14, the driving gear 32 is meshed with the teeth on the outer ring 31-1, and the rotary table hydraulic motor 14 works to drive the driving gear 32 to rotate. Because the driving gear 32 is meshed with the teeth on the outer ring 31-1, when the outer ring 31-1 is stationary and the inner ring of the rotary support 31 rotates, the rotary platform 9 rotates, and the rotary table hydraulic motor 14 is used for driving the rotary table 9 to rotate (under normal conditions, the rotary table 9 rotates by 350° at most). The hydraulic pump 12 is fixedly mounted on the chassis crossbar of the electric vehicle chassis 100, and the hydraulic pump 12 provides hydraulic power for lifting of the first-section arm, extension and retraction of the second-section arm, amplitude variation of the folding arm, rotation of the rotary table, and other boom movements. An output port of the hydraulic pump 12 is connected with the boom control valve set 13. The boom control valve set 13 is fixedly mounted on the chassis crossbar of the electric vehicle chassis 100, the boom control valve set 13 is respectively connected with the folding arm hydraulic cylinder 17, the second-section arm telescopic hydraulic cylinder 16, the first-section arm lifting hydraulic cylinder 15 and the rotary table hydraulic motor 14 through hydraulic pipelines, and the hydraulic pump 12 and the boom control valve set 13 are mounted on the chassis crossbar of the electric vehicle chassis 100 through bolts. A cylinder body of the first-section arm lifting hydraulic cylinder 15 is connected with the rotary table 9 through a hinge shaft, and an output end of the first-section arm lifting hydraulic cylinder 15 is connected with the first-section arm 6 through a hinge shaft. A cylinder body of the second-section arm telescopic hydraulic cylinder 16 is fixed in the first-section arm 6, and an output end of the second-section arm telescopic hydraulic cylinder 16 is connected with the second-section arm 4 through a hinge shaft. A cylinder body of the folding arm hydraulic cylinder 17 is connected with a front end of the second-section arm 4 through a hinge shaft, and an output end of the folding arm hydraulic cylinder 17 is hinged with the folding arm 2. The boom control valve set 13 is electrically connected with the boom controller 11.

The above structural descriptions of the electric airplane deicing vehicle all belong to the prior arts, which will not be repeated herein.

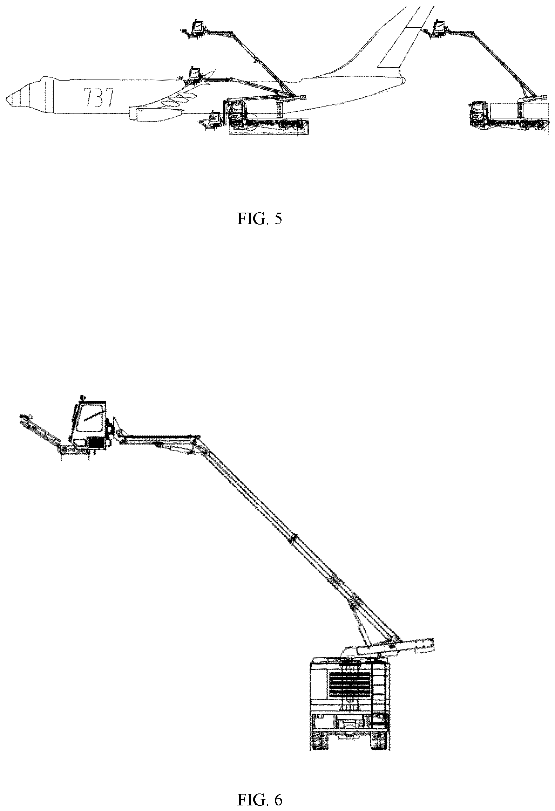

The technical improvement of the present invention lies in that: a folding arm angle sensor 3 is mounted on the folding arm 2 through a bolt, and a first-section arm angle sensor 7 is mounted on the first-section arm 6 through a bolt; and a stay wire sensor 5 is arranged between the second-section arm 4 and the first-section arm 6. As shown in FIG. 4, a body of the stay wire sensor 5 is mounted on the first-section arm 6 through a bolt, and a stay wire end of the stay wire sensor 5 is fixedly mounted on a stay wire fixing rod 5-1 through a nut (the stay wire fixing rod 5-1 is fixedly mounted on the second-section arm 4). The folding arm angle sensor 3, the first-section arm angle sensor 7 and the stay wire sensor 5 are respectively connected and communicated with the boom controller 11 through signal wires. The folding arm angle sensor 3 can measure an angle of the folding arm 2 unfolded under driving of the folding arm hydraulic cylinder 17, and the first-section arm angle sensor 7 can measure an angle of the first-section arm 6 unfolded under driving of the first-section arm lifting hydraulic cylinder 15. As shown in FIG. 8 and FIG. 9, the rotary table angle encoder 8 is fixed on the disc portion 9-1 of the rotary table 9 through a bolt, the driven gear 33 is fixedly connected with a rotor of the rotary table angle encoder 8, and the driven gear 33 is meshed with the teeth on the outer ring 31-1 of the rotary support 31. When the rotary table 9 rotates, the disc portion 9-1 rotates, and because the driven gear 33 is meshed with the outer ring 31-1, the rotor of the rotary table angle encoder 8 may rotate, and the rotary table angle encoder 8 performs detection. The rotary table angle encoder 8 is connected and communicated with the boom controller 11 through a signal wire. When the rotary table 9 rotates, the driven gear 33 rotates synchronously, an angle value detected by the rotary table angle encoder 8 is transmitted to the boom controller 11 through an electrical signal, and the boom controller 11 obtains a rotation angle of the rotary table 9. The operating platform 10 is provided with a boom one-key return switch, the boom one-key return switch is used for controlling boom return, and the boom one-key return switch is electrically connected with the boom controller 11. When the deicing vehicle is located in an initial position shown in FIG. 2, the boom controller 11 sets an angle value detected by the folding arm angle sensor 3, an angle value detected by the first-section arm angle sensor 7, a length value detected by the stay wire sensor 5 and an angle value detected by the rotary table angle encoder 8 to be 0 respectively; and then a deicing operation is performed on an airplane by the deicing vehicle. As shown in FIG. 5, an operator operates the aerial operating device 300 to move in the operating cabin 1 to make the operating cabin 1 close to a to-be-deiced position on the airplane, and different to-be-deiced positions determine a rotation angle of the rotary table 9, a stroke of the first-section arm lifting hydraulic cylinder 15, a stroke of the second-section arm telescopic hydraulic cylinder and a stroke of the folding arm hydraulic cylinder 17. Therefore, the rotation angle of the rotary table 9, the stroke of the first-section arm lifting hydraulic cylinder 15, the stroke of the second-section arm telescopic hydraulic cylinder and the stroke of the folding arm hydraulic cylinder 17 during the deicing operation are unfixed and random. When the boom needs to be retracted after the deicing operation of the deicing vehicle is finished (the boom is in the unfolded state shown in FIG. 6 at the moment), the boom one-key return switch is turned on, a signal is sent to the boom controller 11 by the boom one-key return switch, an angle value A of a position in which the folding arm 2 is located is detected in real time by the folding arm angle sensor 3, a length value B of a position in which the second-section arm 4 is located is detected in real time by the stay wire sensor 5, an angle value C of a position in which the first-section arm 6 is located is detected in real time by the first-section arm angle sensor 7, and an angle value D of a position in which the rotary table 9 is located is detected in real time by the rotary table angle encoder, and data A, B, C and D are sent to the boom controller 11. A control instruction is sent to the boom control valve set 13 by the boom controller 11 so as to control the output end of the folding arm hydraulic cylinder 17 to retract, control the output end of the second-section arm telescopic hydraulic cylinder to retract, control the output end of the first-section arm lifting hydraulic cylinder 15 to retract, and control the rotary table hydraulic motor 14 to rotate reversely, the data A, B, C and D detected in real time are compared with a preset value 0 by the boom controller 11, and until the folding arm angle sensor 3 detects that the angle value A is equal to 0, the stay wire sensor 5 detects that the length value B is equal to 0, the first-section arm angle sensor 7 detects that the angle value C is equal to 0, and the rotary table angle encoder detects that the angle value D is equal to 0, the boom controller 11 stops sending the control instruction to the boom control valve set 13, thus stopping an action of the folding arm hydraulic cylinder 17, an action of the second-section arm telescopic hydraulic cylinder, an action of the first-section arm lifting hydraulic cylinder 15 and an action of the rotary table hydraulic motor 14. The boom returns to the initial position shown in FIG. 2 at the moment, and the one-key return process of the boom is finished. For signal judgment, when four conditions of A=0, B=0, C=0 and D=0 are met at the same time, a control instruction signal sent to the boom control valve set 13 by the boom controller 11 is cut off.

It can be seen that the operation of returning the boom to the initial position is very convenient, the boom retraction speed is fast and the boom retraction time is short, and the boom can return in place accurately. The labor intensity of the operator is greatly reduced. Automatic return prevents the occurrence of misoperation by the operator.

It should be noted that the folding arm angle sensor 3 may specifically be an inclination angle sensor (such as an inclination angle sensor with a model of INX360D-F99-I2E2-V15 of Pepperl+Fuchs Company).

It should be noted that the first-section arm angle sensor 7 may specifically be an inclination angle sensor (such as an inclination angle sensor with a model of INX360D-F99-I2E2-V15 of Pepperl+Fuchs Company).

### Embodiment 2

For the folding arm angle sensor 3, the first-section arm angle sensor 7, the stay wire sensor 5 and the rotary table angle encoder 8 in Embodiment 1, another application may be realized, which is not part of the scope of the claims. A display screen is mounted on the operating platform 10, the display screen is electrically connected with the boom controller 11, the boom controller 11 sends the data A, B, C and D to the display screen, and the display screen displays a movement angle value of the folding arm 2, a length value of a position in which the second-section arm 4 is located, a movement angle value of the first-section arm 6 and a rotation angle value of the detection rotary table 9, so that the display screen can accurately reflect a movement state of the boom, and the operator may also observe the data on the display screen for accurate control.

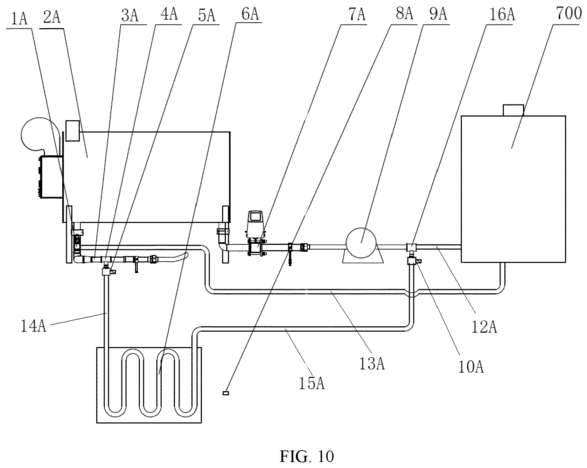

Aiming at another technical problem in the prior art (the deicing operation is performed in an airport apron in winter by the airplane deicing vehicle, the airport apron is empty and has strong convective wind, during the operation of the deicing vehicle, a built-in heating system of the vehicle chassis heats slowly, under an influence of cold wind, a water temperature of a heating system of a cab is difficult to rise to a temperature required for cab heating, so that the heating system of the cab cannot work normally, and the temperature in the cab is usually below zero degrees Celsius, so that the operator needs to wear a heavy cotton-padded coat to keep out the cold, which has poor comfort, affects normal driving operation and is not conducive to safe operation), which is not part of the scope of the claims, the deicing spray system 500 is provided with a deicing liquid heating device, and the deicing liquid heating device is used for heating a deicing liquid entering the deicing spray system 500. As shown in FIG. 10, an inlet of a deicing pump 9A is connected with the deicing liquid tank 700 through a deicing liquid conveying pipeline 12A, and an outlet of the deicing pump 9A is connected with a water inlet pipeline 7A of the deicing liquid heating device 2A through a pipeline. During the deicing operation, the deicing liquid in the deicing liquid tank 700 is conveyed to the deicing liquid heating device 2A through the deicing pump 9A and a pipeline for heating, the heated deicing liquid is sprayed on a surface of the airplane through a deicing spray pipeline 3A in the deicing spray system 500 for aircraft deicing, and when the heated deicing liquid does not need to be sprayed, the heated deicing liquid flows back to the deicing liquid tank 700 through an overflow valve 1A and a reflux pipeline 13A. The deicing liquid heating device 2A has two output ways, which are a first output port and a second output port respectively. An inlet of the overflow valve 1A is connected with the first output port of the deicing liquid heating device 2A, one end of the reflux pipeline 13A is connected with an outlet of the overflow valve 1A, and the other end of the reflux pipeline 13A is connected with the deicing liquid tank 700. The second output port of the deicing liquid heating device 2A is connected with the deicing spray pipeline 3A. These are all the prior arts, and the improvement of additionally providing a heating function lies in that: a first three-junction 4A, a first electromagnetic ball valve 5A, a radiator 6A, a second electromagnetic ball valve 10A and a second three-junction 16A are additionally provided, the deicing spray system 500 is provided with the deicing spray pipeline 3A, the first three-junction 4A is connected with the deicing spray pipeline 3A, the first electromagnetic ball valve 5A is connected with the first three-junction 4A (one pipeline is branched from the deicing spray pipeline 3A through the first three-junction 4A and connected with the first electromagnetic ball valve 5A), the first electromagnetic ball valve 5A is connected with an inlet of a radiator 6A arranged in the cab through a hose 14A, the second three-junction 16A is mounted on the deicing liquid conveying pipeline 12A (one pipeline is branched from the deicing liquid conveying pipeline 12A through this three-junction), an outlet of the second electromagnetic ball valve 10A is connected with the second three-junction 16A, an outlet of the radiator 6A is connected with an inlet of the second electromagnetic ball valve 10A through a pipeline 15A, and the radiator 6A is mounted in the cab 101. The first electromagnetic ball valve 5A is connected with a controller arranged in the cab through a cable, and the second electromagnetic ball valve 10A is connected with the controller through a cable. After the deicing vehicle starts up the deicing liquid heating device 2A, when the temperature in the cab needs to be increased, the controller instructs the first electromagnetic ball valve 5A and the second electromagnetic ball valve 10A to open, and the heated deicing liquid enters the radiator 6A through the hose 14A to heat air in the cab (the deicing liquid flowing out of the radiator 6A passes through the second electromagnetic ball valve 10A and then enters the deicing liquid conveying pipeline 12A through the second three-junction 16A). After heating for a period of time, if the cab does not need to be heated, the controller instructs the first electromagnetic ball valve 5A and the second electromagnetic ball valve 10A to close. It can be seen that the temperature generated by the heating device exchanges heat with the cab, which increases the temperature in the cab and improves the comfort of the operator, the device has a small volume, and the heat exchange of the deicing liquid of the deicing vehicle is used to heat the cab, which has a low cost and a reliable performance. In addition, a temperature sensor 8A may be arranged in the cab, the temperature sensor 8A is adhered to an instrument panel of the cab, and the temperature sensor 8A is connected with the controller arranged in the cab 101 through a signal wire. The first electromagnetic ball valve 5A is connected with the controller arranged in the cab through the cable, and the second electromagnetic ball valve 10A is connected with the controller through the cable. After the deicing vehicle starts the deicing liquid heating device 2A, the temperature sensor 8A detects the temperature in the cab. When the temperature in the cab is lower than a set temperature, the controller instructs the first electromagnetic ball valve 5A and the second electromagnetic ball valve 10A to open, and the heated deicing liquid enters the radiator 6A through the pipeline to heat the cab. When the temperature sensor 8A detects that the temperature in the cab is higher than the set temperature, the controller instructs the first electromagnetic ball valve 5A and the second electromagnetic ball valve 10A to close, and the radiator 6A stops working, so as to stop heating the cab. As time goes by, when the temperature in the cab is lower than the set temperature, the first electromagnetic ball valve 5A and the second electromagnetic ball valve 10A are opened again to supply heat again, and such circulation lasts until the deicing operation is finished. The radiator 6A may specifically be a radiating coil.

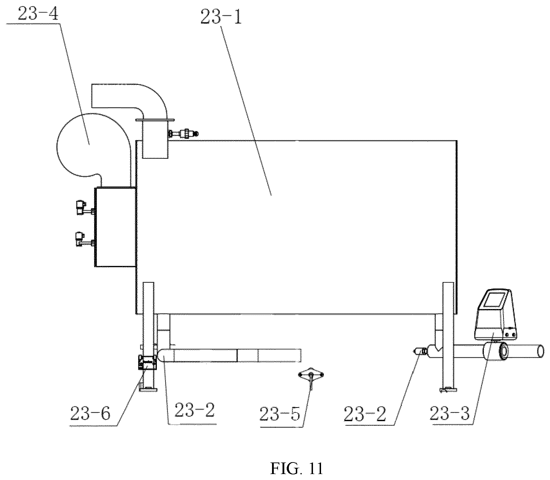

In order to solve another technical problem, which is not part of the scope of the claims, the existing electric airplane deicing vehicle needs to provide power for the heating system by external commercial power when the deicing liquid is heated, with high heating power and heavy power grid load during the heating process, so that power required by a pure electric airplane deicing vehicle for heating the deicing vehicle cannot be met under a condition of power shortage in some airports. Therefore, a deicing liquid fuel heating device is additionally provided as a technical improvement, the deicing liquid fuel heating device is powered by a battery, and the deicing liquid fuel heating device does not need the external commercial power, so that the power grid load is not increased during the heating process, thus ensuring the normal operation of the deicing vehicle under the condition of power shortage in airports , solving the limitation of the electric airplane deicing vehicle by the power shortage in airports, more adapting to a current situation of airport, and realizing the rapid popularization of electrification of the airplane deicing vehicle. The electric airplane deicing vehicle has the advantages of fast heating, low equipment cost, high intelligence, and the like. The deicing liquid fuel heating device is mounted on the chassis crossbar of the electric vehicle chassis 1. The battery management module provides a working power supply for the deicing liquid fuel heating device. As shown in FIG. 11, the deicing liquid fuel heating device comprises a fuel heater 23-1, a temperature sensor 23-2 and a flow sensor 23-3. The deicing liquid tank 700 is connected with a water inlet of the fuel heater 23-1 through a pump and a corresponding pipeline, and a water outlet of the fuel heater 23-1 is connected with the deicing liquid spray pipeline of the deicing spray system through a pipeline. One temperature sensor 23-2 is arranged at the water inlet of the fuel heater 23-1, and the other temperature sensor 23-2 is arranged at the water outlet of the fuel heater 23-1. The flow sensor 23-3 is arranged at the water inlet of the fuel heater, the fuel heater 23-1 is provided with an electronically controlled fan 23-4, an electronically controlled fuel pump 23-5 and an electronically controlled fuel pressure regulating valve 23-6, the electronically controlled fan 23-4 is used for conveying air necessary for combustion into the fuel heating device, and the electronically controlled fuel pump 23-5 is used for conveying fuel to the fuel heating device. The fuel heater 23-1 is provided with a fuel input pipeline, and the electronically controlled fuel pressure regulating valve 23-6 is mounted on the fuel input pipeline. The two temperature sensors 23-2 are respectively connected with the controller in the cab through signal wires, the flow sensor 23-3 is connected with the controller in the cab through a signal wire, and the controller automatically collects information such as temperatures and flow rates of the inlet and the outlet in the fuel heater 23-1. The controller controls the deicing liquid fuel heating device to start and stop. During working, the deicing liquid is input from the water inlet of the fuel heater 23-1, and external fuel is conveyed into a combustion chamber of the fuel heater 23-1 through the fuel input pipeline of the fuel heater 23-1. The controller adjusts a rotation speed of the electric control fan 23-4 and a rotation speed of the electric control fuel pump 23-5, and the fuel combusts in the combustion chamber to generate heat for heating the deicing liquid. The controller adjusts a pressure of the electronically controlled fuel pressure regulating valve 23-6 to adjust a fuel input, so as to control heating power and finally adjust the temperature of the deicing liquid output from the water outlet of the fuel heater 23-1 (the temperature sensor at the water outlet of the fuel heater 23-1 detects an actual temperature of the heated deicing liquid in real time), so that the heated deicing liquid reaches a required temperature. A function of rapidly heating the deicing liquid is achieved. It can be seen that the fuel heating device is additionally provided, which has the advantages of energy saving and environmental protection, low energy consumption, rapid heating, low equipment cost, high intelligence, and the like.

## Claims

1. A deicing vehicle with a one-key return function, comprising an electric vehicle chassis (100), a power battery pack (200), an aerial operating device (300), a deicing spray system (500) and a deicing liquid tank (700), the power battery pack (200), the aerial operating device (300), the deicing liquid tank (700) and the deicing spray system (500) being all connected to a chassis crossbar of the electric vehicle chassis (100), the aerial operating device (300) comprising an operating cabin (1), a folding arm (2), a first-section arm (6), a second-section arm (4), a rotary table (9), a hydraulic pump (12), a folding arm hydraulic cylinder (17), a first-section arm lifting hydraulic cylinder (15), a second-section arm telescopic hydraulic cylinder (16), a boom control valve set (13), a rotary table hydraulic motor (14), a rotary support (31), a driving gear (32) and a driven gear (33), a control system being arranged in the operating cabin (1), the control system being provided with a boom controller (11), **characterized in that**
the chassis crossbar of the electric vehicle chassis (100) being connected with an upright column (30), the rotary support (31) comprising an outer ring (31-1) and an inner ring, the outer ring (31-1) being provided with teeth, the outer ring (31-1) being fixedly connected to a top portion of the upright column (30), the rotary table (9) being fixedly connected with the inner ring of the rotary support (31), the rotary table (9) being provided with a disc portion (9-1), the rotary table hydraulic motor (14) being fixedly connected with the disc portion (9-1) of the rotary table (9), the driving gear (32) being fixedly connected with an output shaft of the rotary table hydraulic motor (14), the driving gear (32) being meshed with the teeth on the outer ring (31-1) of the rotary support (31), the hydraulic pump (12) being fixedly connected to the chassis crossbar of the electric vehicle chassis (100), an output port of the hydraulic pump (12) being connected with the boom control valve set (13), the boom control valve set (13) being fixedly connected to the chassis crossbar of the electric vehicle chassis (100), the boom control valve set (13) being respectively connected with the folding arm hydraulic cylinder (17), the second-section arm telescopic hydraulic cylinder (16), the first-section arm lifting hydraulic cylinder (15) and the rotary table hydraulic motor (14) through hydraulic pipelines, and the boom control valve set (13) being electrically connected with the boom controller (11); a cylinder body of the first-section arm lifting hydraulic cylinder (15) being connected with the rotary table (9) through a hinge shaft, and an output end of the first-section arm lifting hydraulic cylinder (15) being connected with the first-section arm (6) through a hinge shaft; a cylinder body of the second-section arm telescopic hydraulic cylinder (16) being fixed in the first-section arm (6), and an output end of the second-section arm telescopic hydraulic cylinder (16) being connected with the second-section arm (4); and a cylinder body of the folding arm hydraulic cylinder (17) being connected with a front end of the second-section arm (4) through a hinge shaft, and an output end of the folding arm hydraulic cylinder (17) being hinged with the folding arm (2), wherein:
the deicing vehicle with the one-key return function further comprises a folding arm angle sensor (3), a first-section arm angle sensor (7), a stay wire sensor (5), a rotary table angle encoder (8) and a boom one-key return switch, the folding arm angle sensor (3) is connected with the folding arm (2), the first-section arm angle sensor (7) is connected with the first-section arm (6), the stay wire sensor (5) is arranged between the second-section arm (4) and the first-section arm (6), the stay wire sensor (5) comprises a body, a stay wire end and a stay wire fixing rod, the body of the stay wire sensor (5) is fixedly connected to the first-section arm (6), the stay wire fixing rod is fixedly connected with the second-section arm (4), and the stay wire end of the stay wire sensor (5) is fixedly connected to the stay wire fixing rod; the rotary table angle encoder (8) is fixedly connected with the disc portion (9-1) of the rotary table (9), the driven gear (33) is fixedly connected with a rotor of the rotary table angle encoder (8), and the driven gear (33) is meshed with the teeth on the outer ring (31-1) of the rotary support (31); the folding arm angle sensor (3), the first-section arm angle sensor (7), the stay wire sensor (5) and the rotary table angle encoder (8) are respectively connected with the boom controller (11) through signal wires; and the operating cabin (1) is provided with an operating platform (10), the boom one-key return switch is arranged on the operating platform (10), and the control system is provided with the boom one-key return switch to be electrically connected with the boom controller (11).

2. The deicing vehicle with the one-key return function according to claim 1, **characterized in that**, the deicing vehicle with the one-key return function further comprises a heating device, the heating device comprises a first three-junction (4A), a first electromagnetic ball valve (5A), a radiator (6A), a hose (14A), a second electromagnetic ball valve (10A), a second three-junction (16A) and a controller, the first three-junction (4A) is connected with a deicing spray pipeline (3A) in the deicing spray system (500), the first electromagnetic ball valve (5A) is connected with the first three-junction (4A), the first electromagnetic ball valve (5A) is connected with an inlet of the radiator (6A) through the hose (14A), the second three-junction (16A) is connected with a deicing liquid conveying pipeline (12A), an outlet of the second electromagnetic ball valve (10A) is connected with the second three-junction (16A), an outlet of the radiator (6A) is connected with an inlet of the second electromagnetic ball valve (10A) through a pipeline (15A), the radiator (6A) is arranged in a cab, the controller is arranged in the cab, the first electromagnetic ball valve (5A) is connected with the controller through a cable, and the second electromagnetic ball valve (10A) is connected with the controller through a cable.

3. A boom return control method using the deicing vehicle with the one-key return function according to claim 1, **characterized in that**, comprising the following steps of:
when the deicing vehicle is in an initial position, setting an angle value detected by the folding arm angle sensor (3), an angle value detected by the first-section arm angle sensor (7), a length value detected by the stay wire sensor (5) and an angle value detected by the rotary table angle encoder (8) to be 0 respectively by the boom controller (11); and
then performing a deicing operation on an airplane by the deicing vehicle, when the deicing operation of the deicing vehicle is finished, turning on the boom one-key return switch, sending a signal to the boom controller (11) by the boom one-key return switch, detecting an angle value A of a position in which the folding arm (2) is located in real time by the folding arm angle sensor (3), detecting a length value B of a position in which the second-section arm (4) is located in real time by the stay wire sensor (5), detecting an angle value C of a position in which the first-section arm (6) is located in real time by the first-section arm angle sensor (7), detecting an angle value D of a position in which the rotary table (9) is located in real time by the rotary table angle encoder (8), sending data A, B, C and D to the boom controller (11), sending a control instruction to the boom control valve set (13) by the boom controller (11) so as to control the output end of the folding arm hydraulic cylinder (17) to retract, control the output end of the second-section arm telescopic hydraulic cylinder (16) to retract, control the output end of the first-section arm lifting hydraulic cylinder (15) to retract, and control the rotary table hydraulic motor (14) to rotate reversely, comparing the data A, B, C and D detected in real time with a preset value 0 by the boom controller (11), and until the angle value A is equal to 0, the length value B is equal to 0, the angle value C is equal to 0, and the angle value D is equal to 0, stopping sending the control instruction to the boom control valve set (13) by the boom controller (11), thus stopping an action of the folding arm hydraulic cylinder (17), an action of the second-section arm telescopic hydraulic cylinder (16), an action of the first-section arm lifting hydraulic cylinder (15) and an action of the rotary table hydraulic motor (14).

## Patentansprüche

1. Enteisungsfahrzeug mit einer Ein-Knopf-Rückstellfunktion, umfassend ein Elektrofahrzeugchassis (100), einen Antriebsbatteriepack (200), eine Hubarbeitsbühne (300), ein Enteisungssprühsystem (500) und einen Enteisungsflüssigkeitsbehälter (700), wobei der Antriebsbatteriepack (200), die Hubarbeitsbühne (300), der Enteisungsflüssigkeitsbehälter (700) und das Enteisungssprühsystem (500) alle mit einer Chassisquerträger des Elektrofahrzeugchassis (100) verbunden sind, wobei die Hubarbeitsbühne (300) eine Betriebskabine (1), einen Klapparm (2), einen Erstabschnittarm (6), einen Zweitabschnittarm (4), einen Drehtisch (9), eine Hydraulikpumpe (12), einen Klapparm-Hydraulikzylinder (17), einen Hubhydraulikzylinder für den Erstabschnittarm (15), einen Teleskophydraulikzylinder für den Zweitabschnittarm (16), ein Ausleger-Steuerventilblock (13), einen Drehtisch-Hydraulikmotor (14), einen Drehstuhl (31),ein Antriebsgetriebe (32) und ein Abtriebsgetriebe (33) umfasst, wobei in der Betriebskabine (1) ein Steuerungssystem angeordnet ist, das mit einem Ausleger-controller (11) ausgestattet ist, **dadurch gekennzeichnet, dass**
der Chassisquerträger des Elektrofahrzeugchassis (100) mit einer aufrechten Säule (30) verbunden ist, wobei der Drehstuhl (31) einen Außenring (31-1) und einen Innenring umfasst, der Außenring (31-1) mit Zähnen versehen ist, der Außenring (31-1) fest mit einem oberen Teil der aufrechten Säule (30) verbunden ist, der Drehtisch (9) fest mit dem Innenring des Drehstuhls (31) verbunden ist, der Drehtisch (9) mit einem Scheibenteil (9-1) ausgestattet ist, der Drehtisch-Hydraulikmotor (14) fest mit dem Scheibenteil (9-1) des Drehtischs (9) verbunden ist, das Antriebsgetriebe (32) fest mit einer Abtriebswelle des Drehtisch-Hydraulikmotors (14) verbunden ist, das Antriebsgetriebe (32) mit den Zähnen am Außenring (31-1) des Drehstuhls (31) im Eingriff steht, die Hydraulikpumpe (12) fest mit dem Chassisquerträger des Elektrofahrzeugchassis (100) verbunden ist, ein Ausgangsanschluss der Hydraulikpumpe (12) mit dem Ausleger-Steuerventilblock (13) verbunden ist, der Ausleger-Steuerventilblock (13) fest mit dem Chassisquerträger des Elektrofahrzeugchassis (100) verbunden ist, der Ausleger-Steuerventilblock (13) jeweils über Hydraulikleitungen mit dem Klapparm-Hydraulikzylinder (17), dem Zweitabschnittarm-Teleskophydraulikzylinder (16), dem Erstabschnittarm-Hubhydraulikzylinder (15) und dem Drehtisch-Hydraulikmotor (14) verbunden ist, und der Ausleger-Steuerventilblock (13) elektrisch mit dem Ausleger-Controller (11) verbunden ist. ein Zylinderkörper des Erstabschnittarm-Hubhydraulikzylinders (15) mit dem Drehtisch (9) durch eine Gelenkwelle verbunden ist und ein Ausgangsende des Erstabschnittarm-Hubhydraulikzylinders (15) mit dem Erstabschnittarm (6) durch eine Gelenkwelle verbunden ist; ein Zylinderkörper des Zweitabschnittarm-Teleskophydraulikzylinders (16) im Erstabschnittarm (6) befestigt ist und ein Ausgangsende des Zweitabschnittarm-Teleskophydraulikzylinders (16) mit dem Zweitabschnittarm (4) verbunden ist; und ein Zylinderkörper des Klapparm-Hydraulikzylinders (17) mit einem vorderen Ende des Zweitabschnittarms (4) durch eine Gelenkwelle verbunden ist und ein Ausgangsende des Klapparm-Hydraulikzylinders (17) mit dem Klapparm (2) gelenkig verbunden ist, wobei:
der Enteisungsfahrzeug mit Ein-Knopf-Rückstellfunktion ferner einen Klapparmwinkelsensor (3), einen Erstabschnittarmwinkelsensor (7), ein Stahlseilsensor (5), einen Drehtischwinkelgeber (8) und einen Ein-Knopf-Rückschalter eines Auslegers umfasst, wobei der Klapparmwinkelsensor (3) mit dem Klapparm (2) verbunden ist, der Erstabschnittarmwinkelsensor (7) mit dem Erstabschnittarm (6) verbunden ist, das Stahlseilsensor (5) zwischen dem Zweitabschnittarm (4) und dem Erstabschnittarm (6) angeordnet ist, wobei das Stahlseilsensor (5) ein Gehäuse, ein Stahlseilende und eine Stahlseilbefestigungsstange umfasst, wobei das Gehäuse des Stahlseilsensors (5) fest mit dem Erstabschnittarm (6) verbunden ist, die Stahlseilbefestigungsstange fest mit dem Zweitabschnittarm (4) verbunden ist, und das Stahlseilende des Stahlseilsensors (5) fest mit der Stahlseilbefestigungsstange verbunden ist, der Drehtischwinkelgeber (8) fest mit dem Scheibenteil (9-1) des Drehtischs (9) verbunden ist, das Abtriebsgetriebe (33) fest mit einem Rotor des Drehtischwinkelgebers (8) verbunden ist, und das Abtriebsgetriebe (33) in die Zähne am Außenring (31-1) des Drehstuhls (31) eingreift, der Klapparmwinkelsensor (3), der Erstabschnittarmwinkelsensor (7), das Stahlseilsensor (5) und der Drehtischwinkelgeber (8) jeweils über Signalleitungen mit dem Ausleger-Controller (11) verbunden sind, und die Betriebskabine (1) mit einer Betriebsplattform (10) ausgestattet ist, auf der der Ein-Knopf-Rückschalter eines Auslegers angebracht ist, und das Steuerungssystem so ausgeführt ist, dass der Ein-Knopf-Rückschalter eines Auslegers elektrisch mit dem Ausleger-Controller (11) verbunden ist.

2. Enteisungsfahrzeug mit der Ein-Knopf-Rückstellfunktion nach Anspruch 1, **dadurch gekennzeichnet, dass** das Enteisungsfahrzeug mit der Ein-Knopf-Rückstellfunktion weiterhin eine Heizeinrichtung umfasst, wobei die Heizeinrichtung eine erste T-Stück-Verbindung (4A), ein erstes elektromagnetisches Kugelventil (5A), einen Heizkörper (6A), einen Schlauch (14A), ein zweites elektromagnetisches Kugelventil (10A), eine zweite T-Stück-Verbindung (16A) und eine Steuerung umfasst, wobei die erste T-Stück-Verbindung (4A) mit einer Enteisungssprühleitung (3A) im Enteisungssprühsystem (500) verbunden ist, das erste elektromagnetische Kugelventil (5A) mit der ersten T-Stück-Verbindung (4A) verbunden ist, das erste elektromagnetische Kugelventil (5A) über den Schlauch (14A) mit einem Einlass des Heizkörpers (6A) verbunden ist, die zweite T-Stück-Verbindung (16A) mit einer Enteisungsflüssigkeitsförderleitung (12A) verbunden ist, ein Auslass des zweiten elektromagnetischen Kugelventils (10A) mit der zweiten T-Stück-Verbindung (16A) verbunden ist, ein Auslass des Heizkörpers (6A) über eine Leitung (15A) mit einem Einlass des zweiten elektromagnetischen Kugelventils (10A) verbunden ist, der Heizkörper (6A) in einer Fahrerkabine angeordnet ist, die Steuerung in der Fahrerkabine angeordnet ist, das erste elektromagnetische Kugelventil (5A) über ein Kabel mit der Steuerung verbunden ist und das zweite elektromagnetische Kugelventil (10A) über ein Kabel mit der Steuerung verbunden ist.

3. Verfahren zur Steuerung der Rückbewegung eines Auslegers unter Verwendung des Enteisungsfahrzeugs mit der Ein-Knopf-Rückstellfunktion nach Anspruch 1, **dadurch gekennzeichnet, dass** es die folgenden Schritte umfasst:
wenn sich das Enteisungsfahrzeug in einer Ausgangsposition befindet, Einstellen des vom Klapparmwinkelsensor (3) erfassten Winkelwerts, des vom Erstabschnittarmwinkelsensor (7) erfassten Winkelwerts, des vom Tragseilsensor (5) erfassten Längenwerts und des vom Drehtischwinkelgeber (8) erfassten Winkelwerts von dem Ausleger-Controller (11) jeweils auf 0; und
dann Durchführung eines Enteisungsvorgangs an einem Flugzeug durch das Enteisungsfahrzeug, wenn der Enteisungsvorgang des Enteisungsfahrzeugs abgeschlossen ist, Einschalten des Ein-Knopf-Rückschalters eines Auslegers, Senden eines Signals an den Auslegers-Controller (11) durch den Ein-Knopf-Rückschalters eines Auslegers, Erfassen eines Winkels A einer Position, in der sich der Klapparm (2) befindet, in Echtzeit durch den Klapparm-Winkelsensor (3), Erfassen eines Längenwerts B einer Position, in der sich der Zweitabschnittarm (4) befindet, in Echtzeit durch den Stahlseilsensor (5),
Erfassen eines Winkels C einer Position, in der sich der Erstabschnittarm (6) in Echtzeit befindet, durch den Erstabschnittarmwinkelsensor (7), Erfassen eines Winkels D einer Position, in der sich der Drehtisch (9) in Echtzeit befindet, durch den Drehtischwinkelgeber (8), Senden der Daten A, B, C und D an den Auslegers-Controller (11), Senden einer Steueranweisung an den Auslegers-Steuerventilblock (13) durch den Auslegers-Controller (11), um das Ausgangsende des Klapparm-Hydraulikzylinders (17) einzufahren, das Ausgangsende des Zweitabschnittarm-Teleskophydraulikzylinders (16) einzufahren, das Ausgangsende des Erstabschnittarm-Hubhydraulikzylinders (15) einzufahren und den Drehtisch-Hydraulikmotor (14) rückwärts rotieren zu lassen, Vergleichen der in Echtzeit erfassten Daten A, B, C und D mit einem vorgegebenen Wert 0 durch den Auslegers-Controller (11), und bis der Winkel A gleich 0 ist, der Längenwert B gleich 0 ist, der Winkel C gleich 0 ist und der Winkel D gleich 0 ist, Stoppen des Sendens der Steueranweisung an den Auslegers-Steuerventilblock (13) durch den Auslegers-Controller (11), wodurch eine Aktion des Klapparm-Hydraulikzylinders (17), eine Aktion des Zweitabschnittarm-Teleskophydraulikzylinders (16), eine Aktion des Erstabschnittarm-Hubhydraulikzylinders (15) und eine Aktion des Drehtisch-Hydraulikmotors (14) gestoppt werden.

## Revendications

1. Véhicule de dégivrage ayant une fonction de retour à une touche, comprenant un châssis de véhicule électrique (100), un bloc-batterie d'alimentation (200), un dispositif de manipulation aérienne (300), un système de pulvérisation de dégivrage (500) et un réservoir de liquide de dégivrage (700), le bloc-batterie d'alimentation (200), le dispositif de manipulation aérienne (300), le réservoir de liquide de dégivrage (700) et le système de pulvérisation de dégivrage (500) étant tous reliés à une traverse de châssis du châssis de véhicule électrique (100), le dispositif de manipulation aérienne (300) comprenant une cabine de manipulation (1), un bras pliant (2), un bras de première section (6), un bras de seconde section (4), une table rotative (9), une pompe hydraulique (12), un vérin hydraulique de bras pliant (17), un vérin hydraulique de levage de bras de première section (15), un vérin hydraulique télescopique de bras de seconde section (16), un ensemble de valve de commande de flèche (13), un moteur hydraulique de table rotative (14), un support rotatif (31), un engrenage d'entraînement (32) et un engrenage entraîné (33), un système de commande étant disposé dans la cabine de manipulation (1), le système de commande étant pourvu d'un contrôleur de flèche (11), **caractérisé en ce que** la traverse de châssis du châssis de véhicule électrique (100) est reliée à une colonne verticale (30), le support rotatif (31) comprend un anneau extérieur (31-1) et un anneau intérieur, l'anneau extérieur (31-1) est pourvu de dents, l'anneau extérieur (31-1) est relié de manière fixe à une partie supérieure de la colonne verticale (30), la table rotative (9) est reliée de manière fixe à l'anneau intérieur du support rotatif (31), la table rotative (9) est pourvue d'une partie disque (9-1), le moteur hydraulique de table rotative (14) est relié de manière fixe à la partie disque (9-1) de la table rotative (9), l'engrenage d'entraînement (32) est reliée de manière fixe à un arbre de sortie du moteur hydraulique de table rotative (14), l'engrenage d'entraînement (32) est engrené avec les dents de l'anneau extérieur (31-1) du support rotatif (31), la pompe hydraulique (12) est reliée de manière fixe à la traverse de châssis du châssis de véhicule électrique (100), un orifice de sortie de la pompe hydraulique (12) es reliée à l'ensemble de vanne de commande de flèche (13), l'ensemble de vanne de commande de flèche (13) est relié de manière fixe à la traverse de châssis du châssis de véhicule électrique (100), l'ensemble de vanne de commande de flèche (13) est relié au vérin hydraulique de bras pliant (17), au vérin hydraulique télescopique de bras de seconde section (16), au vérin hydraulique de levage de bras de première section (15) et au moteur hydraulique de table rotative (14) respectivement par l'intermédiaire de conduites hydrauliques, et l'ensemble de vanne de commande de flèche (13) est connecté électriquement au contrôleur de flèche (11) ; un corps de cylindre du vérin hydraulique de levage de bras de première section (15) est relié à la table rotative (9) par l'intermédiaire d'un axe d'articulation, et une extrémité de sortie du vérin hydraulique de levage de bras de première section (15) est reliée au bras de première section (6) par l'intermédiaire d'un axe d'articulation ; un corps de cylindre du vérin hydraulique télescopique de bras de seconde section (16) est fixé dans le bras de première section (6), et une extrémité de sortie du vérin hydraulique télescopique de bras de seconde section (16) est reliée au bras de seconde section (4) ; et un corps de cylindre du vérin hydraulique de bras pliant (17) est relié à une extrémité avant du bras de seconde section (4) par l'intermédiaire d'un axe d'articulation, et une extrémité de sortie du vérin hydraulique de bras pliant (17) est articulée au bras pliant (2), dans lequel:
le véhicule de dégivrage ayant la fonction de retour à une touche comprend en outre un capteur d'angle de bras pliant (3), un capteur d'angle de bras de première section (7), un capteur de câble de maintien (5), un encodeur d'angle de table rotative (8) et un commutateur de retour à une touche de flèche, le capteur d'angle de bras pliant (3) est relié au bras pliant (2), le capteur d'angle de bras de première section (7) est relié au bras de première section (6), le capteur de câble de maintien (5) est disposé entre le bras de seconde section (4) et le bras de première section (6), le capteur de câble de maintien (5) comprend un corps, une extrémité de câble de maintien et une tige de fixation de câble de maintien, le corps du capteur de câble de maintien (5) est relié de manière fixe au bras de première section (6), la tige de fixation de câble de maintien est reliée de manière fixe au bras de seconde section (4), et l'extrémité de câble de maintien du capteur de câble de maintien (5) est reliée de manière fixe à la tige de fixation de câble de maintien ; l'encodeur d'angle de table rotative (8) est relié de manière fixe à la partie disque (9-1) de la table rotative (9), l'engrenage entraîné (33) est relié de manière fixe à un rotor de l'encodeur d'angle de table rotative (8), et l'engrenage entraîné (33) est engrené avec les dents de l'anneau extérieur (31-1) du support rotatif (31) ; le capteur d'angle de bras pliant (3), le capteur d'angle de bras de première section (7), le capteur de câble de maintien (5) et l'encodeur d'angle de table rotative (8) sont respectivement reliés au contrôleur de flèche (11) par l'intermédiaire de fils de signal ; et la cabine de manipulation (1) est pourvue d'une plateforme de manipulation (10), le commutateur de retour à une touche de flèche est disposé sur la plateforme de manipulation (10), et le système de commande est pourvu du commutateur de retour à une touche de flèche connecté électriquement au contrôleur de flèche (11).

2. Véhicule de dégivrage ayant la fonction de retour à une touche selon la revendication 1, **caractérisé en ce que** le véhicule de dégivrage ayant la fonction de retour à une touche comprend en outre un dispositif de réchauffage, le dispositif de réchauffage comprend une première tri-jonction (4A), une première vanne à bille électromagnétique (SA), un radiateur (6A), un tuyau (14A), une seconde vanne à bille électromagnétique (10A), une seconde tri-jonction (16A) et un contrôleur, la première tri-jonction (4A) est reliée à une conduite de pulvérisation de dégivrage (3A) dans le système de pulvérisation de dégivrage (500), la première vanne à bille électromagnétique (5A) est reliée à la première tri-jonction (4A), la première vanne à bille électromagnétique (5A) est reliée à une entrée du radiateur (6A) par l'intermédiaire du tuyau (14A), la seconde tri-jonction (16A) est reliée à une conduite de transport de liquide de dégivrage (12A), une sortie de la seconde vanne à bille électromagnétique (10A) est reliée à la seconde tri-jonction (16A), une sortie du radiateur (6A) est reliée à une entrée de la seconde vanne à bille électromagnétique (10A) par l'intermédiaire d'une conduite (15A), le radiateur (6A) est disposé dans une cabine, le contrôleur est disposé dans la cabine, la première vanne à bille électromagnétique (5A) est reliée au contrôleur par l'intermédiaire d'un câble, et la seconde vanne à bille électromagnétique (10A) est reliée au contrôleur par l'intermédiaire d'un câble.

3. Procédé de commande de retour de flèche à l'aide du véhicule de dégivrage ayant la fonction de retour à une touche selon la revendication 1, **caractérisée en ce qu'**il comprend les étapes suivantes : lorsque le véhicule de dégivrage se trouve à une position initiale, définir une valeur d'angle détectée par le capteur d'angle de bras pliant (3), une valeur d'angle détectée par le capteur d'angle de bras de premier section (7), une valeur de longueur détectée par le capteur de câble de maintien (5) et une valeur d'angle détectée par l'encodeur d'angle de table rotative (8) à 0 respectivement par le contrôleur de flèche (11) ; et
puis effectuer une opération de dégivrage sur un avion à l'aide du véhicule de dégivrage, lorsque l'opération de dégivrage du véhicule de dégivrage est terminée, activer le commutateur de retour à une touche de flèche, envoyer un signal au contrôleur de flèche (11) par le commutateur de retour à une touche de flèche, détecter en temps réel une valeur d'angle A d'une position dans laquelle se trouve le bras pliant (2) à l'aide du capteur d'angle de bras pliant (3), détecter en temps réel une valeur de longueur B d'une position dans laquelle se trouve le bras de seconde section (4) à l'aide du capteur de câble de maintien (5), détecter en temps réel une valeur d'angle C d'une position dans laquelle se trouve le bras de première section (6) à l'aide du capteur d'angle de bras de première section (7), détecter en temps réel une valeur d'angle D d'une position dans laquelle se trouve la table rotative (9) à l'aide de l'encodeur d'angle de table rotative (8), envoyer des données A, B, C et D au contrôleur de flèche (11), envoyer une instruction de commande à l'ensemble de valve de commande de flèche (13) par le contrôleur de flèche (11) afin de commander l'extrémité de sortie du vérin hydraulique de bras pliant (17) à se rétracter, de commander l'extrémité de sortie du vérin hydraulique télescopique de bras de seconde section (16) à se rétracter, de commander l'extrémité de sortie du vérin hydraulique de levage de bras de première section (15) à se rétracter, et de commander le moteur hydraulique de table rotative (14) à tourner en marche arrière, comparer les données A, B, C et D détectées en temps réel avec une valeur prédéfinie 0 par le contrôleur de flèche (11), et jusqu'à ce que la valeur d'angle A soit égale à 0, la valeur de longueur B soit égale à 0, la valeur d'angle C soit égale à 0 et la valeur d'angle D soit égale à 0, et arrêter l'envoi de l'instruction de commande à l'ensemble de valve de commande de flèche (13) par le contrôleur de flèche (11), arrêtant ainsi une action du vérin hydraulique de bras pliant (17), une action du vérin hydraulique télescopique de bras de seconde section (16), une action du vérin hydraulique de levage de bras de première section (15) et une action du moteur hydraulique de table rotative (14).
